Europäisches Patentamt

European Patent Office

Office européen des brevets

(19)

(11) EP 0 782 729 B1

(12) EUROPÄISCHE PATENTSCHRIFT

(45) Veröffentlichungstag und Bekanntmachung des Hinweises auf die Patenterteilung:
27.05.1998 Patentblatt 1998/22

(21) Anmeldenummer: 95931130.9

(22) Anmeldetag: 13.09.1995

(51) Int Cl.⁶: **G06F 15/80**

(86) Internationale Anmeldenummer:
PCT/DE95/01253

(87) Internationale Veröffentlichungsnummer:
WO 96/08776 (21.03.1996 Gazette 1996/13)

(54) **VERFAHREN UND ANORDNUNG ZUR AUFBEREITUNG EINER EINGANGSGRÖSSE EINES NEURONALEN NETZES**

PROCESS AND CONFIGURATION FOR PROCESSING AN INPUT QUANTITY OF A NEURAL NETWORK

PROCEDE ET SYSTEME DE TRAITEMENT D'UNE VALEUR D'ENTREE D'UN RESEAU NEURONAL

(84) Benannte Vertragsstaaten:
**DE FR GB**

(30) Priorität: 15.09.1994 DE 4432932
29.06.1995 DE 19523776

(43) Veröffentlichungstag der Anmeldung:
09.07.1997 Patentblatt 1997/28

(73) Patentinhaber: **SIEMENS AKTIENGESELLSCHAFT**
**80333 München (DE)**

(72) Erfinder:
• **STERZING, Volkmar**
**D-81739 München (DE)**
• **TRESP, Volker**
**D-80539 München (DE)**
• **MASCHLANKA, Jörg**
**D-76571 Gaggenau (DE)**

(56) Entgegenhaltungen:
**WO-A-94/17489**

• **IEEE EXPERT, Bd. 8, Nr. 2, 1.April 1993 Seiten 44-53, XP 000359129 LEONARD J A ET AL 'DIAGNOSING DYNAMIC FAULTS USING MODULAR NEURAL NETS'**
• **SPEECH PROCESSING 1, TORONTO, MAY 14 - 17, 1991, Bd. 1, 14.Mai 1991 INSTITUTE OF ELECTRICAL AND ELECTRONICS ENGINEERS, Seiten 81-84, XP 000245172 GRECO F ET AL 'A RECURRENT TIME-DELAY NEURAL NETWORK FOR IMPROVED PHONEME RECOGNITION'**
• **INTERNATIONAL JOINT CONFERENCE ON NEURAL NETWORKS (IJCNN), SAN DIEGO, JUNE 17 - 21, 1990, Bd. VOL. 1, Nr. -, 17.Juni 1990 INSTITUTE OF ELECTRICAL AND ELECTRONICS ENGINEERS, Seiten 57-62, XP 000144194 NOBUO HATAOKA ET AL 'SPEAKER-INDEPENDENT PHONEME RECOGNITION ON TIMIT DATABASE USING INTEGRATED TIME-DELAY NEURAL NETWORKS (TDNNS)'**
• **PROCEEDINGS OF THE EUROPEAN CONFERENCE ON SPEECH COMMUNICATION AND TECHNOLOGY (EUROSPEECH), PARIS, SEPT. 26 - 28, 1989, Bd. 2, 1.September 1989 TUBACH J P;MARIANI J J, Seiten 561-564, XP 000214291 MIKKO KOKKONEN ET AL 'USING SELF-ORGANIZING MAPS AND MULTI-LAYERED FEED-FORWARD NETS TO OBTAIN PHONEMIC TRANSCRIPTIONS OF SPOKEN UTTERANCES'**

EP 0 782 729 B1

**Beschreibung**

Die Erfindung bezieht sich auf ein Verfahren zur neuronalen Modellierung von dynamischen Prozessen mit sehr verschiedenen Zeitkonstanten.

Neuronale Netze finden in die vielfältigsten technischen Gebiete Eingang. Überall dort, wo es gilt, aus komplexen technischen Zusammenhängen und aus unzureichenden Informationen Entscheidungen abzuleiten, erweisen sich neuronale Netze als besonders geeignet. Zur Bildung einer oder mehrerer Ausgangsgrößen werden dem neuronalen Netz beispielsweise eine oder mehrere Eingangsgrößen zugeführt. Hierzu wird ein solches Netz zunächst für den speziellen Einsatzfall trainiert und anschließend generalisiert und danach wird es mit einem anderen Datensatz als den Trainingsdaten validiert. Neuronale Netze erweisen sich für viele Einsatzfälle als besonders geeignet, da sie universell trainierbar sind.

Ein häufig auftretendes Problem im Zusammenhang mit dem Einsatz von neuronalen Netzen besteht allerdings darin, daß häufig die Anzahl der Eingänge des neuronalen Netzes zu groß ist und damit die Komplexität des Netzes für den Anwendungsfall unnötig groß erscheint. Insbesondere erreicht das zu große neuronale Netz beim Training nicht die erforderliche Leistung auf den Generalisierungsdaten. Statt der Problemstruktur werden dann beim Training häufig Anwendungsbeispiele auswendig gelernt. In der Praxis ist es also gewünscht, die Zahl der möglichen Eingangsgrößen möglichst auf die notwendigen, d.h. auf die den Eingangsgrößen zu beschränken, welche die größten Auswirkungen auf die zu bestimmenden Ausgangsgrößen haben. In der Praxis kann auch das Problem auftreten, daß ein neuronales Netz mit Eingangsgrößen versorgt werden soll, welche zu unterschiedlichen Zeiten anfallen, die teilweise Stunden oder Tage auseinander liegen. Für solche Fälle werden beispielsweise rekurrente neuronale Netze eingesetzt. Diese Netze enthalten intern zwischen den Neuronen Rückführungen und es ist ihnen so möglich, eine Art Gedächtnis über die angefallenen Eingangsgrößen aufzubauen. Wegen der einfacheren Handhabung, insbesondere weil sie leichter trainierbar sind, erscheinen aber häufig vorwärts gerichtete neuronale Netze im Einsatzfeld wünschenswert.

Bei technischen Prozessen, insbesondere bei biochemischen Verfahren, wirken oft verschiedene Teilprozesse mit sehr verschiedenen Zeitkonstanten zusammen. Chemische Reaktionen erfolgen oft im Bruchteil einer Sekunde. Bei Abbau oder Synthese von Stoffen durch Mikroorganismen und dem Wachstum und Absterben von Bakterien oder Pilzen treten oft Zeitkonstanten von Stunden oder Tagen auf. Besonders in Systemen bei denen Stoffkreisläufe mit Rückführungen und Zwischenspeichern bestehen, treten Zeitkonstanten im Bereich von Stunden und Tagen auf. Eine separate Behandlung der unterschiedlich schnell ablaufenden Teilprozesse ist oft nicht möglich. So besteht beispielsweise eine enge Kopplung zwischen den einzelnen bei der Abwasserreinigung ablaufenden Prozessen. Außerdem sind Meßwerte "zwischen" den einzelnen Prozessen als Voraussetzung für eine separate neuronale Modellierung nicht oder nur unter sehr hohen Kosten zu gewinnen. Dies gilt insbesondere bei den biochemischen Prozessen, die auf Kläranlagen bei der Abwasserbehandlung ablaufen.

Eine geeignete Repräsentation der Eingangsdaten, in Verbindung mit der Selektion relevanter Prozeßinformationen durch das neuronale Netz, ist die Voraussetzung, um das gleichzeitige Wirken von verschiedenen Zeitkonstanten neuronal modellieren zu können.

Um sehr schnell ablaufende Teilprozesse neuronal modellieren zu können, müssen Daten einerseits mit einer hohen Abtastrate gewonnen und dem neuronalen Netz als Eingangsgrößen angelegt werden. Andererseits sind zur Modellierung der langsam ablaufenden Prozesse die Daten über einen entsprechend weit in die Vergangenheit zurückreichenden Bereich als Eingangswerte an ein vorwärts gerichtetes Netz anzulegen. Diese Vorgehensweise hat den Nachteil, daß das neuronale Netz bereits bei einer kleinen Anzahl von Meßgrößen eine große Anzahl von Eingängen und damit eine große Menge an adaptierbaren Parametern besitzt. Durch diese hohe Zahl freier Parameter besitzt das Netz eine zu hohe Komplexität als das den Daten entspricht und neigt zum "Overfitting" /HFZ1/,/HFZ2/. So erreicht das neuronale Netz zwar bei den zum Training verwendeten Datenpunkten eine sehr gute Approximation der Daten. Bei den nicht zum Training verwendeten "Generalisierungsdaten" zeigen Netze mit einer zu hohen Anzahl adaptierbarer Parameter schlechte Performanz. Eine alternative Möglichkeit zur neuronalen Modellierung von Prozessen mit sehr verschiedenen Zeitkonstanten stellen rekurrente neuronale Netze (RNN) dar. Wegen den im Netz realisierten Rückkopplungen sind RNN in der Lage, Information von vorangegangenen Daten zu speichern und so Prozesse mit langen Zeitkonstanten oder mit Rückführungen zu modellieren. Der Nachteil von RNN besteht darin, daß einfache Lernverfahren wie z.B. Backpropagation nicht mehr verwendbar sind und statt dessen spezielle Lernverfahren wie z. B. Real Time Recurrent Learning (RTRL) oder Backpropagation Through Time (BPTT) eingesetzt werden müssen. Besonders bei einer hohen Anzahl an Datenpunkten sind RNN schwer zu trainieren und neigen zu numerischen Instabilitäten /Ster/.

Aus der internationalen Veröffentlichung WO-A-94/17489 ist ein Back Propagation-Netz bekannt, welches im Trainingsmodus Vorverarbeitungsparameter und zeitliche Verzögerungen festlegt. Im Arbeitsmodus werden dann die Arbeitsdaten zusammen mit den Vorverarbeitungsparametern verarbeitet und mit den festgelegten zeitlichen Verzögerungen in das System als Eingabedaten eingespeist. Ein solches Netz eignet sich besonders für Anwendungen, bei denen die Eingangsdaten auf unterschiedlichen Zeitskalen basieren.

2

Aus den Zeitschriftenartikel IEEE EXPERT, Bd. 8, No. 2, 01.04.1993, Seiten 44 bis 53, J.A. Leonard und M.A. Kramer: "Diagnosing dynamic faults using modular neural nets" sind allgemeine Diagnosemöglichkeiten von dynamischen Fehlern in modularen Netzen bekannt. Dort wird beispielsweise der zeitliche Aspekt von Eingabedaten dadurch berücksichtigt, daß jedesmal wenn ein neuer Eingabedatensatz dazukommt der älteste Datensatz wegfällt und das System im Anschluß eine neue Berechnung durchführt. Hierdurch wird die Anzahl der jeweils vom System zu berücksichtigenden Eingabendatensätze in Grenzen gehalten. Im genannten Stand der Technik werden also beschränkte Möglichkeiten zur Berücksichtigung der Systemvergangenheit angegeben. Weiterhin werden dort deren unterschiedlichen Techniken ausführlich erläutert. Ein weiterer Stand der Technik ist hierzu nicht bekannt.

Die der Erfindung zugrundeliegende Aufgabe besteht darin, eine Anordnung und ein Verfahren anzugeben, womit die Anzahl von zeitlich anfallenden Eingangsgrößen eines neuronalen Netzes sinnvoll reduziert werden kann. Insbesondere soll durch das erfindungsgemäße Verfahren und die erfindungsgemäße Anordnung quasi ein Gedächtnis für vorwärts gerichtete neuronale Netze realisiert werden. Weiterhin soll das erfindungsgemäße Verfahren den besonderen Anforderungen, welche chemische Prozesse mit unterschiedlichen Zeitkonstanten unterliegen, gerecht werden.

Diese Aufgabe wird für das Verfahren gemäß den Merkmalen des Patentanspruchs 1 und für die Steueranordnung gemäß den Merkmalen des Patentanspruchs 13 gelöst.

Weiterbildungen der Erfindung ergeben sich aus den abhängigen Ansprüchen.

Ein besonderer Vorteil des erfindungsgemäßen Verfahrens besteht darin, daß damit Prozeßdaten über einen sehr langen Zeitraum hinweg berücksichtigt werden können, indem für Meßwerte, welche eine längere Zeitperiode zurückliegen, ein größeres Meßwertintervall herangezogen wird und durch eine Faltung ein sinnvoller Mittelwert aus diesem Intervall gewonnen wird. Durch eine geeignete Wahl der Faltungskurve und der Intervallgröße kann so eine bestimmte zeitliche Dämpfung bei der Berücksichtigung der einzelnen Eingangswerte eingeführt werden, indem beispielsweise länger zurückliegende Meßwerte über ein größeres Intervall und mit einer flacheren Glockenkurve gefaltet werden.

Vorteilhafterweise kann beim erfindungsgemäßen Verfahren zu einer genauen Berücksichtigung der zeitlich abhängigen Eingangsgrößen eine unterschiedliche Intervallgröße eingeführt werden, welche in Richtung zur Vergangenheit hin immer größer wird, wobei es beispielsweise vorteilhaft auch möglich ist, verschiedene Intervallgruppen zu bilden, welche dieselbe Breite aufweisen.

Vorteilhaft ist es beim erfindungsgemaßen Verfahren vorgesehen, die Intervall so zu wählen, daß sie sich überlappen, da so jeder Wert der Zeitreihe zur Ermittlung der gesamten Eingangsgrößen des neuronalen Netzes herangezogen wird. Die Bewertung der einzelnen Werte der Zeitreihe wird dabei beispielsweise um so homogener je größer der Überlappungsbereich der einzelnen Intervalle ist.

Vorzugsweise wird die Breite der Glockenkurve, mit welcher die Zeitreihe innerhalb des Intervalles gefaltet wird, so gewählt, daß sie in der Größe der Breite des Intervalles entspricht, denn so erhält man ein sinnvolles Faltungsergebnis, daß praxisnah den erfaßten Werten innerhalb des Intervalles entspricht.

Vorzugsweise wird als Faltungskurve eine Gaußglockenkurve gewählt, da diese statistischen Prozessen in der Natur angenähert ist und somit besonders genau den Werten innerhalb der Zeitreihe angepaßt erscheint. Insbesondere wird hierzu die Standardabweichung so breit gewählt, wie die Breite des Intervalles ist.

Vorzugsweise ist es beim erfindungsgemaßen Verfahren vorgesehen, die Eingangsdaten des neuronalen Netzes als Zeitreihe eines Prozesses zu bilden, welcher unterschiedliche Zeitkonstanten aufweist und diese Zeitkonstanten bei der Intervallaufteilung der Zeitreihe zu berücksichtigen und zwar in der Form, daß die Intervallbreite Vielfachen dieser Zeitkonstante, bzw. der mehreren Konstanten entspricht. So wird sichergestellt, daß das Zeitverhalten des zu überwachenden bzw. zu steuernden Prozesses durch das erfindungsgemäße Verfahren besonders genau angenähert werden kann.

Vorzugsweise wird das erfindungsgemäße Verfahren unter Verwendung eines vorwärts gerichteten neuronalen Netzes durchgeführt, da diese kein Gedächtnis aufweisen und durch das erfindungsgemäße Verfahren die Vergangenheit in einer Weise berücksichtigt wird, daß es ein Gedächtnis für diese Netze ersetzen kann.

Vorzugsweise werden die Eingangsgrößen des neuronalen Netzes auf einen Bereich normiert, um ein schnelleres und besseres Training des Netzes zu ermöglichen.

Vorzugsweise wird das erfindungsgemäße Verfahren sowohl beim Training des Netzes als auch im Betrieb desselben eingesetzt, da nur so sichergestellt wird, daß das erlernte Verhalten auch die in der Praxis gewünschten Resultate erzeugt.

Besonders vorteilhaft wird mit dem erfindungsgemäßen Verfahren ein chemischer Prozeß gesteuert, welcher unterschiedliche Zeitkonstanten aufweist, insbesondere können dabei die Eingangsdaten von einer Kläranlage gewonnen werden, da dort häufig Zeitkonstanten von bis zu 72 Stunden neben schnell veränderlichen eine Rolle spielen.

Besonders vorteilhaft ist eine erfindungsgemäße Vorrichtung mit einem Meßsensor, einem Speicher zum Speichern der Meßwerte dieses Sensors, einem Praprozessor zur Aufbereitung der Meßwerte beispielsweise nach dem erfindungsgemäßen Verfahren und einem neuronalen Netz, welches die erzeugten Eingangsdaten auswertet und daraus einen Wert gewinnt, welcher dem Effektor zugeführt wird, um den chemischen Prozeß zu beeinflussen. So wird eine besonders einfache regelungstechnische Anordnung realisiert.

Im folgenden wird die Erfindung anhand von Figuren weiter erläutert.

Figur 1 zeigt eine schematische Darstellung des erfindungsgemäßen Verfahrens.

Figur 2 zeigt beispielhaft die Behandlung des Meßwertes aus einer Zeitreihe nach dem erfindungsgemäßen Verfahren.

Figur 3 zeigt den Effekt beim Einsatz unterschiedlich breiter Intervalle.

Figur 4 zeigt ein Beispiel einer erfindungsgemäßen Anordnung.

Figur 5 zeigt ein Blockschaltbild einer Kläranlage, welche nach dem erfindungsgemäßen Verfahren betrieben wird.

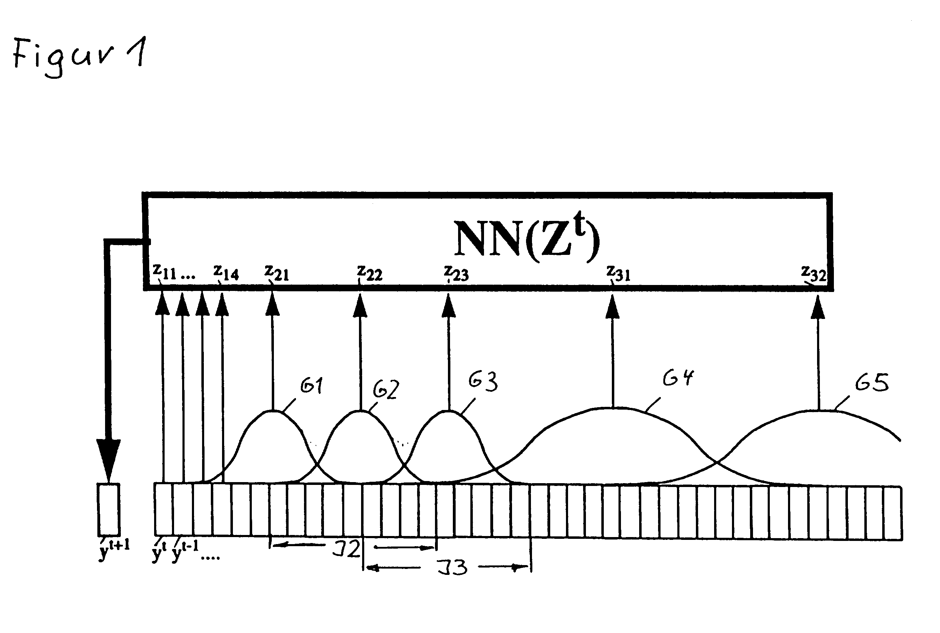

Figur 1 zeigt ein Blockschaltbild als Represantation für das erfindungsgemäße Verfahren. Besonders ist hier das neuronale Netz $NN(Z^t)$ dargestellt. Weiterhin ist eine Zeitreihe von Eingangswerten des neuronalen Netzes $y^t, y^{t-1}$..... bis weit in die Vergangenheit hinein dargestellt. Dem neuronalen Netz werden Eingangsgrößen $Z_{11}$ bis $Z_{32}$ zugeführt. Es soll damit einen in der Zukunft liegenden Eingangswert $y^{t+1}$ als Ausgangsgröße prognostizieren.

Die dargestellte Zeitreihe y besteht beispielsweise aus zu verschiedenen Zeitpunkten diskret aufgenommenen Meßwerten eines Meßwertgebers, welcher Eingangsgrößen für das neuronale Netz aufnimmt. Wie an diesen Beispiel erkannt werden kann, werden die ersten vier Meßwerte $Z_{11}$ bis $Z_{14}$ direkt an das neuronale Netz weitergegeben, um damit dem Bedarf an aktuellen Eingangsgrößen besonders stark Rechnung tragen zu können. Für weiter zurückliegende Werte in der Vergangenheit, werden beispielsweise Intervalle I2 und I3 definiert. Für diese Intervalle ist beispielsweise hier eine Intervallbreite von 9 Eingangsgrößen gewählt worden. Das Intervall I2 wird beispielsweise mit einer glockenförmigen Kurve G2 gefaltet, um den Meßwert $Z_{22}$ als Maximum des Faltungsergebnisses zu erhalten. Dieser Wert wird als Represantation für alle im Intervall I2 vorhandene Eingangsgrößen an das neuronale Netz weitergegeben. Dieser Vorgang geschieht analog zur Findung der Eingangsgröße $Z_{21}$ und $Z_{23}$ für das neuronale Netz. Es ist dabei zu beachten, daß sich die einzelnen Intervalle I2 und I3 überlappen. Diese Überlappung wird vorteilhaft vorgegeben, um jeden einzelnen Meßwert der Zeitreihe zur Bildung einer Eingangsgröße für das neuronale Netz berücksichtigen zu können. Weiter kann aus Figur 1 erkannt werden, daß die Intervallbreite zur Vergangenheit hin zunimmt. Das heißt je weiter die Meßwerte bzw. die in der Zeitreihe erfaßten Eingangsgrößen in der Vergangenheit zurückliegen, desto breiter wird das Intervall gewählt, um nur noch eine statistische Aussage dieser Werte treffen zu können. Das Intervall G4 ist beispielsweise 19 Meßwerte breit, wenn man davon ausgeht, daß die Breite der zur Faltung verwendete Glockenkurve näherungsweise der Breite des Intervalles entspricht.

Wegen der größeren Flexibilitat bei der Entwicklung des neuronalen Modells und der besseren Stabilität des Lernvorganges sollen vorzugsweise vorwärts gerichtete neuronale Netze im erfindungsgemäßen Verfahren verwendet werden.

Der Grundgedanke des vorgeschlagenen Verfahrens ist, daß nur für die Teilprozesse mit sehr kleinen Zeitkonstanten die exakten Werten aus der unmittelbaren Vergangenheit benötigt werden. Bei Prozessen mit sehr langen Zeitkonstanten ist i.A. die Differenz zwischen dem i-ten und i+1 -ten Meßwert ohne Bedeutung. Deshalb können wenige über einen längeren Zeitpunkt gemittelte Werte verwendet werden.

Aus diesem Grundgedanken ergibt sich folgendes Verfahren. Jede Eingangsdatenreihe wird durch eine Hierarchie von größeren und kleineren zeitverzögerten "Fenstern" dargestellt. Dazu wird die Originalzeitreihe beispielsweise mit Gaußglocken entsprechend verschiedener Varianz gefaltet. Zur Represantation der Daten für Teilprozesse mit sehr großer Varianz werden die mit Gaußglocken großer Varianz gefalteten Zeitreihen um entsprechend große Zeitbeträge verschoben. So lassen sich dem neuronale Netz mit wenigen Eingangsgrößen trotz langer Zeitkonstanten alle wesentlichen Information darstellen. Gleichzeitig erlaubt die Verwendung der mit Gaußglocken kleiner Varianz gefalteten und um kleine Beträge verschobenen Zeitreihen eine ausreichend genaue Darstellung des Ablaufes von Teilprozessen mit kleinen Zeitkonstanten. Sehr schnell ablaufende Vorgänge können auch durch die direkte Verwendung der ungefalteten Zeitreihe und der unmittelbar vorausgegangenen Werte dargestellt werden. Aus der Zeitreihe

$$y^t, y^{t-1} ..., y^{t-N}$$

soll der nächste Wert der Zeitreihe $y^{t+1}$ durch ein neuronales Netz vorhergesagt werden. Dazu bilden wir

$$Z_{i,j}^t = \sum_{k=0}^{N} y^{t-k} \frac{1}{\sqrt{2\pi\sigma_i^2}} \exp\left(-\frac{(k - j\Delta_i)^2}{2\sigma_i^2}\right)$$

mit.

i=1,...,M:     Weite der Gaußglocke

j=1,...,$K_i$:       Verzögerung

$K_i <= N/\Delta_i$:       Zahl der für jedes i angebotenen Werte

Für i=1 wird beispielsweise gewählt: $\sigma_i=0$, $\Delta_i=1$, $K_i=4$

Für i=2 wird beispielsweise gewählt: $\sigma_i=10$, $\Delta_i=10$, $K_i=3$

hier wird eine entsprechend größere Mittelung durchgeführt. Wir formen eine Matrix Z mit den Elementen $z_{i,j}$, welche den Eingang des neuronalen Netzes darstellt. Die Vorhersage des neuronalen Netzes NN läßt sich somit beschreiben zu:

$$y^{t+1} = NN(Z^t)$$

Die Verwendung der Gaußglocken für die Faltung ist hierbei nur eine Realisierungsmöglichkeit zur "Glättung" der Zeitreihe. Kenntnisse des Systems und der im System vorhandenen Zeitkonstanten erlauben es, die Varianz der Gaußglocken für Faltungen und die Beträge der Zeitverschiebungen geeignet auswählen zu können und dem neuronalen Netz mit wenigen Inputs die entscheidenden Informationen anbieten zu können. Vor der neuronalen Verarbeitung erfolgt bevorzugt eine Skalierung der Eingangsgrößen $z_{i,j}$. Die Skalierung steigert die Geschwindiakeit beim Lernen und verhindert ein "Übersteuern" bei der Adaption der Parameter, die zu sehr kleinen Eingangsgrößen gehören.

Eine sehr gute Modellierung ist möglich, wenn neben den Originaldatenreihen beim Training zuerst die stark zeitverschobenen und mit Gaußglocken großer Varianz gefalteten Eingänge aktiviert werden. Schrittweise werden dem neuronalen Netz durch aktivieren der "schwächer" gefalteten und weniger zeitverschobenen Eingangswerte zusätzliche Information angeboten werden. Nach erfolgtem Training des neuronalen Netzes mit allen Eingangsgrößen $z_{i,j}$ wird die Sensitivität des Netzwerkausgangs auf die Eingangsgrößen untersucht. Basierend auf der Sensitivitätsanalyse /ReZi/ werden vom neuronalen Netz die zur Modellierung des Prozesses wichtigen Eingangsgrößen $z_{i,j}$ ausgewählt. Nur diese werden zum Training des Netzes verwendet. Durch diese Beschränkung der Zahl der Netzwerkparameter und der Komplexität ist eine sehr gute Modellierung von Prozessen möglich.

Netzwerkparameter mit starker Streuung bezogen auf ihre Größe werden beispielsweise gelöscht, da diese keinen relevanten Beitrag zum Netzwerkausgang liefern.

Insbesondere ist bei Figur 1 zu beachten, daß alle Werte von also $Z_{11}$ bis $Z_{32}$ dem neuronalen Netz zur selben Zeit zugeführt werden, um daraus die Ausgangsgröße $y^{t+1}$ zu ermitteln. Indem das erfindungsgemäße Verfahren über die Faltung auch Werte in der Vergangenheit berücksichtigt, wird vorteilhaft auch für vorwärts gerichtete neuronale Netze ein Gedächtnis realisiert. So wird dieser Nachteil, kein Gedächtnis zu haben, für vorwärts gerichtete neuronale Netze eliminiert, wobei deren Vorteile, einfach zu trainieren zu sein, erhalten bleiben. Auch ist zu beachten, daß bei der erfindungsgemäßen Vorgehensweise ein in einem jeweiligen Intervall liegender Wert mehreren Intervallen zugeordnet sein kann, so daß dieser auch mehrmals einer Faltung mit unterschiedlichen Faltungsfunktionen unterzogen werden kann.

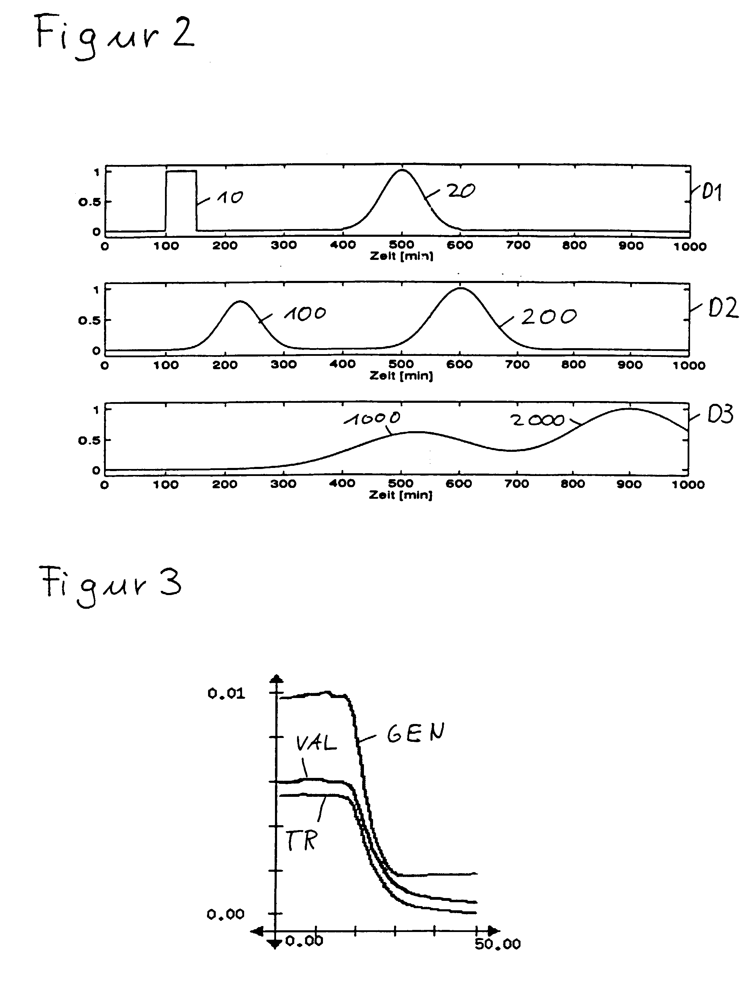

Figur 2 zeigt anhand dreier Diagramme D1 bis D3 die Eingangsgrößen des neuronalen Netzes, welche einer Faltung mit unterschiedlichen breiten Glockenkurven unterworfen werden. In D1 sind beispielsweise die Netzeingangsgrößen 10 und 20 im Originalzustand dargestellt. In D2 werden diese Werte aus D1 einer Faltung mit einer Glockenkurve von geringerer Breite wie sie beispielsweise in Figur 1 mit G1 bezeichnet ist, unterzogen, um so ein Maß für Eingangsgrößen aus der nahe zurückliegenden Vergangenheit gewinnen zu können. Das Faltungsergebnis 100 repräsentiert den Eingang 10 aus D1 und das Faltungsergebnis 200 repräsentiert den Eingang 20 aus D1. In D3 sind die Eingangswerte aus D1 mit einer Faltungsfunktion größerer Breite, wie sie beispielsweise in Figur 1 mit G4 bezeichnet ist, dargestellt. Das Faltungsergebnis 1000 entspricht hier dem Wert 10 und das Faltungsergebnis 2000 dem Wert 20 aus D1. Anhand der unterschiedlichen Diagramme kann deutlich erkannt werden, daß im Verlauf von D1 zu D3 die Werte immer weiter gemittelt werden und die Übergänge kontinuierlich aneinander angepaßt werden. Besonders gut kann bei D3 erkannt werden, daß 1000 und 2000 nahezu fließend ineinander übergehen. Mit einer Faltung der Zeitreihe nach Art von D3 wird besonders der Tatsache Rechnung getragen, daß vorwarts gerichtete neuronale Netze kein Gedächtnis besitzen und das Werte, die weit in der Vergangenheit zurückliegen auch als Eingangsgröße für solche Netze berücksichtigt werden müssen. Beispielsweise wird zu deren Faltung eine Gaußglocke mit großer Varianz verwendet. Besonders gute Ergebnisse mit dem erfindungsgemäßen Verfahren erzielt man, wenn man als Breite der Faltungsfunktion, d.h. beispielsweise als Varianz der Gaußkurve ein Vielfaches einer bekannten Zeitkonstante eines Prozesses verwendet, von welchem diese Eingangsgrößen des neuronalen Netzes abgeleitet werden sollen, da dadurch eine Filterwirkung für signifikante Eingangsgrößen erzielt wird.

In Figur 3 sind die Lernkurven eines neuronalen Netzes dargestellt. Nach rechts ist die Anzahl der Lernzyklen und nach oben der Fehler aufgetragen. Mit TR ist der Verlauf der Trainingskurve, mit GEN der Verlauf der Generalisierungskurve und VAL der Verlauf der Validierungskurve angegeben. Deutlich ist zu erkennen, daß bei ca. 22 ein deut-

EP 0 782 729 B1

licher Abfall aller drei Kurven eintritt. Dieser Zeitpunkt stellt genau den Zeitpunkt dar, an welchem dem Netz nicht nur aktuelle Eingangsgrößen, sondern auch mit einer Zeitkonstante des Prozesses gefaltete Eingangsgrößen aus der Vergangenheit zugeführt wurden. Wie man erkennen kann, tritt eine dramatische Absenkung des Fehlers in allen drei Bereichen ein.

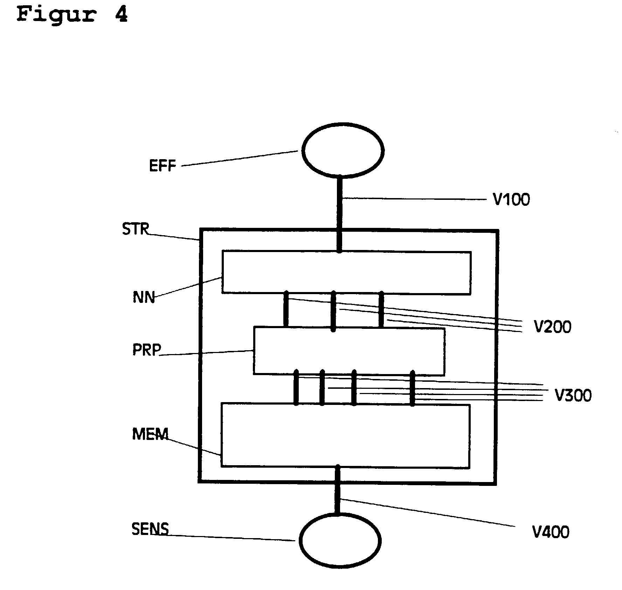

Figur 4 zeigt ein Beispiel einer erfindungsgemäßen Steueranordnung für einen chemischen Prozeß. Im einzelnen ist ein Sensor SENS, ein Speicher MEM, ein Praprozessor PRP, ein Effektor EFF in der Steueranordnung STR enthalten. Der Sensor ist über Verbindungsleitungen V400 mit dem Speicher MEM und dieser über Verbindungsleitungen V300 mit dem Praprozessor PRP verbunden. Der Praprozessor gibt seine Daten über Verbindungsleitungen V200 an das neuronale Netz NN weiter. Das neuronale Netz erzeugt aus diesen Daten eine Ausgangsgröße zur Veränderung des chemischen Prozesses mittels des Effektors und gibt diese Daten über die Verbindungsleitung V100 an den Effektor weiter. Im Speicher dieser erfindungsgemäßen Steueranordnung werden vom Sensor abgegebene Daten zu diskreten Zeitpunkten erfaßt. Der Praprozessor bildet aus diesen Daten Eingangsgrößen für das neuronale Netz NN, indem er weiter zurückliegende Werte der Meßergebnisse des Sensors in Intervallen zusammenfaßt, deren Breite um so breiter gewählt wird, je weiter diese Meßwerte in der Vergangenheit liegen. Anschließend wird vom Praprozessor eine Faltung des betrachteten Intervalles mit einer Gaußglocke oder einer anderen glockenförmigen Funktion durchgeführt und daraus ein repräsentativer Wert für das gesamte Intervall gewonnen. Dieser Wert wird als Eingangsgröße repräsentativ für die restlichen Werte des Intervalles dem neuronalen Netz NN zusammen mit einem weiteren Wert zugeführt, der beispielsweise aus einem weiteren Intervallbereich erfindungsgemäß extrahiert worden sein kann, oder aber aus dem Speicher an das neuronale Netz weitergegeben wird. Das neuronale Netz NN ist speziell für den chemischen Prozeß trainiert worden und wertet nun diese Eingangsgrößen, welches es mittels Leitungen V200 erhält dahingehend aus, um eine Eingangsgröße zu bilden, mit welcher der chemische Prozeß beeinflußt werden kann. Hierzu ist beispielsweise ein Effektor EFF vorgesehen. Beispielsweise wird mit dem Sensor der Phosphatgehalt eines Abwassers in einer Kläranlage detektiert und mit dem Effektor ein Fällungsmittel dosiert, welches das im Abwasser vorhandene Phosphat ausfällen soll. Es ist dabei besonders gewünscht, daß das Fällungsmittel im stöchiometrischen Gleichgewicht zugegeben wird, so daß keine Reaktionsrückstände übrig bleiben.

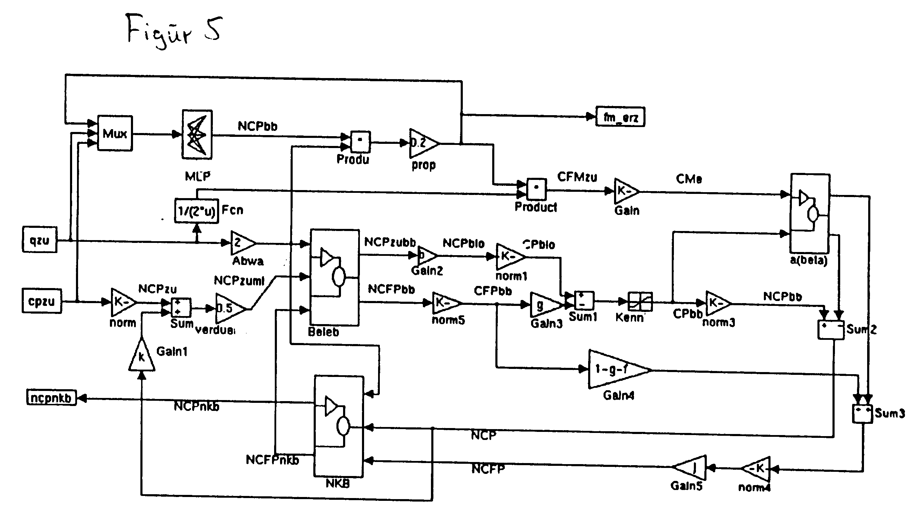

Figur 5 zeigt als Kläranlage ein Beispiel für einen chemischen Prozeß, der mit Hilfe des erfindungsgemäßen Verfahrens bzw. der erfindungsgemäßen Steueranordnung gesteuert werden kann. Für die Elimination der im Abwasser enthaltenen Phosphate werden im allgemeinen Fällmittel mit dreiwertigen Metallionen als Wirksubstanz eingesetzt. Mit der folgenden Differentialgleichung kann beispielsweise die Elimination des im Abwasser enthaltenen Phosphat im Belebungsbecken einer Kläranlage vereinfacht dargestellt werden:

$$\frac{d}{dt}CP = -\left(\frac{Q}{V}\right)CP + \left(\frac{Q}{V}\right)CP_{zu}$$

Dabei steht Q für die durchfließende Abwassermenge, V für das Volumen des Beckens und CP für die Phosphatkonzentration des Abwassers. Für das Training des neuronalen Netzes können beispielsweise Praxisdaten verwendet werden, welche anhand einer realen Kläranlage ermittelt wurden. Figur 5 verdeutlicht beispielsweise den Ablauf der Phosphatelimination. Das sich nach Zugabe des Fällmittels im Nachklärbecken NKB absetzende Belegschlamm-/Fällschlammgemisch besitzt selbst phosphatfällende Eigenschaften. Es wird beim Belebungsverfahren ins Belebungsbecken belebt zurückgeführt. Seine Fällwirkung wurde beispielhaft mit ca. 3 Tage abgeschätzt, woraus die großen Zeitkonstanten, die innerhalb dieses Systems eine Rolle spielen, erkannt werden können. Beispielsweise können die Werte einer Zeitreihe für das erfindungsgemäße Verfahren, also mit 3 Tagen, sprich 72 Stunden, gefaltet werden. Durch diese Fallungseigenschaften reduziert sich der Verbrauch an Fällmittel. Die durchschnittliche Verweildauer des Abwassers im Belebungs- und Nachklärbecken beträgt z.B. ca. 8 Stunden. Die Ausfällung der Phosphate vollzieht sich bei der meist angewendeten Simultanfallung, jedoch in Bruchteilen einer Minute. Um das gleichzeitige Wirken von so verschiedenen Zeitkonstanten neuronal modellieren zu können, müssen die Eingangsdaten geeignet repräsentiert werden.

Eingangsdaten für das neuronale Netz sind beispielsweise die Größen Abwassermenge qzu, Phosphatkonzentration cpzu, Phosphatmenge MLP und Fallmittelmenge CFMzu. Jede Eingangsdatenreihe wird beispielsweise durch eine Hierarchie von größeren und kleineren zeitverzögerten Fenstern dargestellt. Zur Glättung wird die Originalzeitreihe beispielsweise zuerst mit Gaußglocken verschieden großer Varianz beispielsweise 24 Stunden, 8 Stunden und 2 Stunden gefaltet. Die gefalteten Zeitreihen werden dann um feste Zeitspannen gegenüber der ungefalteten Zeitreihe verschoben, um sicherzustellen, daß dem neuronalen Netz alle repräsentativen Werte der Zeitreihe zur selben Zeit zugeführt werden können. Zum Abschluß werden die Zeitreihen beispielsweise auf das Intervall [-1, 1] skaliert. Die so abgeleiteten Eingangsgrößen repräsentieren die gemittelten Meßwerte der Vergangenheit und ermöglichen dem neuronalen Netz eine Modellierung des Systems trotz der verschiedenen Zeitkonstanten, welche dem System innewohnen.

Für das Problem der Phosphatelimination wird das neuronale Netz beispielsweise durch stochastisches Lernen trainiert, wobei die Lernrate durch die Varianz der Gewichtsänderungen bestimmt wird. Bei diesem Problem, so zeigen experimentelle Befunde, sind die Modelle mit radialen Basisfunktionen (RBF) denen mit Multilayer-Perceptrons (MLP) bezüglich ihrer Generalisierungsfahigkeit unterlegen. Die beste Modellierung ist vorzugsweise mit MLPs zu erreichen, bei denen zuerst eine lineare Abbildung der Eingangsdaten trainiert wurde. Vorzugsweise werden diese dazu mit nacheinander aktivierten zeitverschobenen Netzwerkeingängen, welche hier mit $\delta = 24$ Stunden, $\delta = 8$ Stunden und $\delta = 2$ Stunden gefalteten werden trainiert und dabei die dazu gehörigen Gewichte jeweils bis zur Konvergenz trainiert. Danach wird beispielsweise die Komplexität des Netzes mit bekannten Methoden reduziert. Dazu gehören das Verschmelzen hochkorrelierter Knoten in der verborgenen Schicht, das Löschen wenig relevanter Eingangsgrößen, sowie das Entfernen von Gewichten mit starker Streuung, bezogen auf ihre Größe. Durch diese Netzwerkoptimierung kann beispielsweise 75% der Gewichte geprunt und die Generalisierungsleistung auf der Validierungsmenge erheblich gesteigert werden.

Die Evaluation des erfindungsgemäßen Verfahrens zeigte, daß eine sehr gute Modellierung der bei der Phosphatfällung ablaufenden Vorgänge möglich ist. Das Netz erreicht auf den Originaldaten für Regenwetter, Phosphatstöße und trockenes Wetter sehr gute Generalisierungsleistungen. Vorteilhaft ist vor allem die hohe Generalisierungsleistung für den Netzausgang, der die Phosphatkonzentration am Ausfluß des Belebungsbeckens beschreibt. Gerade an dieser Stelle wird bei der Simultanfällung das Fällmittel zugegeben. Beispielsweise kann die Netzeingangsgröße Phosphatkonzentration hier durch korrelierte und leichter zu vermessende Ersatzgrößen, wie Leitfähigkeit und Trübung des Abwassers ersetzt werden.

Literatur:

/HFZ1/ Hergert, F., Finnoff, W., Zimmermann, H. G.:"A comparison of weight elimination methods for reducing complexity in neural networks", in Proceedings of the Int. Joint Conf. on neural networks, Baltimore, 1992.

/HFZ2/ Hergert, F., Finnoff, W., Zimmermann, H. G.:"Evaluation of Pruning Techniques", ESPRIT Projekt Bericht 5293 - Galatea, Doc. no.: S23.M12.-August 1992

/ReZi/ Rehkugler, H., Zimmermann, H. G.: "Neuronale Netze in der Ökonomie", Kapitel 1: H. G. Zimmermann - "Neuronalen Netze als Entscheidungskalkül".-München: Vahlen, 1994. ISBN 3-8006-1871-0

/Ster/ Sterzing, V., Schlrmann, B.: "Recurrent Neural Networks for Temporal Learning of Time Series", in Proceedings of the 1993 Internation Conference on Neural Networks, March 27-31, San Francisco 843-850

**Patentansprüche**

1. Verfahren zur Aufbereitung einer Eingangsgröße eines neuronalen Netzes,

   a) bei dem eine Zeitreihe aus einer Menge von Werten der Variablen Eingangsgröße gebildet wird, indem die Eingangsgröße zu diskreten Zeitpunkten bestimmt wird,
   b) bei dem aus der Zeitreihe mindestens ein erstes Intervall derart abgegrenzt wird, daß die Breite des Intervalles um so größer gewählt wird, je weiter die darin liegenden Werte in der Vergangenheit zurückliegen,
   c) bei dem die vom ersten Intervall abgegrenzte erste Teil-Zeitreihe zur Mittelwertbildung mit einer im wesentlichen glockenförmigen Funktion gefaltet und der erste Maximalwert des Faltungsergebnisses gebildet wird,
   d) und bei dem dem neuronalen Netz der erste Maximalwert repräsentativ für die erste Teil-Zeitreihe im wesentlichen zeitgleich mit einem anderen Eingangswert zugeführt wird, welcher sich innerhalb der Zeitreihe, aber außerhalb des ersten Intervalles befindet.

2. Verfahren nach Anspruch 1, bei dem mehrere Intervallgruppen abgegrenzt werden, wobei mindestens jeweils zwei aufeinanderfolgende Intervalle einer solchen Intervallgruppe die gleiche Breite aufweisen und bei dem im Übrigen für die Bestimmung der jeweiligen Intervallbreite einer Intervallgruppe analog zu Anspruch 1 verfahren wird.

3. Verfahren nach einem der vorangehenden Ansprüche, bei dem die Intervallgrenzen zweier benachbarter Intervalle so gewählt werden, daß die Intervalle mindestens einen Wert der Zeitreihe gemeinsam haben.

4. Verfahren nach einem der vorangehenden Ansprüche, bei dem die Breite der glockenförmigen Kurve im Wesentlichen die gleiche Breite aufweist, wie das jeweilige damit zu faltende Intervall.

**5.** Verfahren nach einem der vorangehenden Ansprüche, bei dem als glockenförmige Kurve eine Gaußverteilung gewählt wird.

**6.** Verfahren nach Anspruch 4 und 5, mit einer Standardabweichung in Größe der Intervallbreite.

**7.** Verfahren nach einem der vorangehenden Ansprüche, bei dem die Eingangswerte aus einem System abgeleitet werden, welches mindestens eine bekannte Zeitkonstante aufweist und bei dem mindestens eine Intervallbreite in Größe der Zeitkonstante, oder von einem Vielfachen davon gewählt wird.

**8.** Verfahren nach einem der vorangehenden Ansprüche, bei dem die Eingangswerte einem vorwärts gerichteten neuronalen Netz zugeführt werden.

**9.** Verfahren nach einem der vorangehenden Ansprüche, bei dem die Werte der Zeitreihe auf ein festes Intervall normiert werden.

**10.** Verfahren nach einem der vorangehenden Ansprüche, welches sowohl beim Training, als auch beim Betrieb des neuronalen Netzes angewendet wird.

**11.** Verfahren nach einem der vorangehenden Ansprüche, bei dem dem neuronalen Netz zum Training in einem ersten Schritt ungefaltete Werte aus der Zeitreihe zugeführt werden und es in einem zweiten Schritt mit den Eingangsgrößen trainiert wird, welche sich aus der Faltung von Werten der Zeitreihe aus der Vergangenheit ergeben.

**12.** Verfahren nach einem der vorangehenden Ansprüche, bei dem mindestens eine Zeitreihe aus Meßwerten einer Abwasserkläranlage gebildet wird.

**13.** Steueranordnung für einen chemischen Prozeß,

a) bei der mindestens ein Sensor zur Erfassung eines ersten Meßwertes vorgesehen ist,
b) bei der mindestens ein Speicher zum Speichern von Meßwerten vorgesehen ist,
c) bei dem ein Prozessor für im Speicher gespeicherte Meßwerte vorgesehen ist,
d) bei der ein vorwärts gerichtetes neuronales Netz vorgesehen ist,
e) und bei der mindestens ein Effektor zur Beeinflussung des chemischen Prozesses vorgesehen ist,
f) und bei der im Speicher eine Zeitreihe, gebildet aus einer Menge von in regelmäßigen Zeitabständen gemessenen Meßwerten, abgespeichert wird, welche dem Präprozessor zugeführt wird, wobei dieser mehrere Meßwerte in einem Intervall derart zusammenfaßt, daß die Breite des Intervalles um so größer gewählt wird, je weiter die darin liegenden Meßwerte in der Vergangenheit zurückliegen, und daraus durch Faltung mit einer glockenförmigen Kurve einen einzelnen Wert ableitet, diesen gemeinsam mit einem weiteren im Speicher gespeicherten Wert der Zeitreihe dem neuronalen Netz zuführt, welcher sich aber außerhalb der Intervalles befindet, und woraus dieses eine Stellgröße für den chemischen Prozeß bildet und bei der diese Stellgröße an den Effektor weitergegeben wird.

## Claims

**1.** Process for conditioning an input variable of a neural network,

a) in which a time series is formed from a set of values of the input variable by determining the input variable at discrete times,
b) in which, from the time series, at least a first interval is delimited in such a way that the length of the interval is selected to be greater the further the values therein lie back in the past,
c) in which the first partial time series delimited by the first interval is convoluted with an essentially bell-shaped function to form an average and the first maximum value of the convolution result is formed,
d) and in which the neural network is fed the first maximum value which is representative of the first partial time series essentially simultaneously with another input value which is located within the time series but outside the first interval.

**2.** Process according to Claim 1, in which a plurality of interval groups is delimited, in each case at least two successive intervals of such an interval group having the same length, and in which a process analogous to Claim 1 is followed for the determination of the respective interval length of an interval group.

3. Process according to one of the preceding claims, in which the interval limits of two adjacent intervals are selected such that the intervals have at least one value from the time series in common.

4. Process according to one of the preceding claims, in which the width of the bell-shaped curve has essentially the same length as the respective interval to be convoluted therewith.

5. Process according to one of the preceding claims, in which a Gauss distribution is selected as the bell-shaped curve.

6. Process according to claim 4 and 5, having a standard deviation of the magnitude of the interval length.

7. Process according to one of the preceding claims, in which the input values are derived from a system which has at least one known time constant, and in which at least one interval length of the magnitude of the time constant, or a multiple thereof, is selected.

8. Process according to one of the preceding claims, in which the input values are fed to a forwardly directed neural network.

9. Process according to one of the preceding claims, in which the values of the series are normalized to a fixed interval.

10. Process according to one of the preceding claims, which is used both during training and during operation of the neural network.

11. Process according to one of the preceding claims, in which in a first step unconvoluted values from the time series are fed to the neural network for training and, in a second step, said network is trained with the input variables which result from the convolu-tion of values from the time series from the past.

12. Process according to one of the preceding claims, in which at least one time series is formed from measured values from a sewage treatment plant.

13. Control arrangement for a chemical process,

   a) in which at least one sensor is provided for acquiring a first measured value,
   b) in which at least one memory is provided for storing measured values,
   c) in which a processor is provided for measured values stored in the memory,
   d) in which a forwardly directed neural network is provided,
   e) and in which at least one effector is provided for influencing the chemical process,
   f) and in which there is stored in the memory a time series, formed from a set of measured values measured at regular time intervals, which series is fed to the preprocessor, the latter combining a plurality of measured values in one interval in such a way that the length of the interval is selected to be greater the further the measured values located therein lie back in the past, and deriving a single value therefrom by means of convolution with a bell-shaped curve, and feeding this value, together with a further value from the time series stored in the memory, to the neural network, which is, however, outside the interval, and from which values the latter forms a manipulated variable for the chemical process, and in which control arrangement this manipulated variable is forwarded to the effector.

**Revendications**

1. Procédé pour le traitement d'une grandeur d'entrée d'un réseau neuronal,

   a) dans lequel une série temporelle est formée à partir d'une quantité de valeurs de la grandeur d'entrée variable, en déterminant la grandeur d'entrée à des moments discrets,
   b) dans lequel au moins un premier intervalle de la série temporelle est délimité de telle sorte que la largeur de l'intervalle est choisie d'autant plus grande que les valeurs comprises dans ledit intervalle, remontent à plus loin dans le passé,

c) dans lequel la première série temporelle partielle délimitée par le premier intervalle est convoluée avec une fonction essentiellement en forme de cloche pour la formation d'une valeur moyenne et dans lequel la première valeur maximale du résultat de la convolution est formée,

d) et dans lequel la première valeur maximale représentative pour la première série temporelle partielle est amenée au réseau neuronal essentiellement en même temps qu'avec une autre valeur d'entrée, laquelle se trouve à l'intérieur de la série temporelle mais en dehors du premier intervalle.

2. Procédé selon la revendication 1, dans lequel plusieurs groupes d'intervalles sont délimités, où au moins chaque fois deux intervalles consécutifs d'un tel groupe d'intervalles présentent la même largeur et où du reste il est procédé de manière analogue à la revendication 1 pour la détermination des largeurs d'intervalles respectives d'un groupe d'intervalles.

3. Procédé selon l'une des revendications précédentes, dans lequel les limites d'intervalles de deux intervalles voisins sont choisies de telles sorte que les intervalles ont en commun au moins une valeur de la série temporelle.

4. Procédé selon l'une des revendications précédentes, dans lequel la largeur de la courbe en forme de cloche présente essentiellement la même largeur que l'intervalle respectif à convoluer.

5. Procédé selon l'une des revendications précédentes, dans lequel une distribution de Gauss est choisie comme courbe en forme de cloche.

6. Procédé selon la revendication 4 et 5, avec un écart type de la grandeur de la largeur de l'intervalle.

7. Procédé selon l'une des revendications précédentes, dans lequel les valeurs d'entrée sont déduites d'un système qui présente au moins une constante de temps connue et dans lequel est choisie au moins une largeur d'intervalle de la grandeur de la constante de temps ou d'un multiple de cette constante.

8. Procédé selon l'une des revendications précédentes, dans lequel les valeurs d'entrée sont amenées à un réseau neuronal avancé.

9. Procédé selon l'une des revendications précédentes, dans lequel les valeurs de la série temporelle sont normées sur un intervalle fixe.

10. Procédé selon l'une des revendications précédentes, lequel est employé aussi bien lors de l'entraînement que lors du fonctionnement du réseau neuronal.

11. Procédé selon l'une des revendications précédentes, dans lequel dans un premier temps, pour l'entraînement, des valeurs non convoluées de la série temporelle sont amenées au réseau neuronal et dans lequel dans un deuxième temps ledit réseau neuronal est entraîné avec des variables d'entrée qui résultent de la convolution de valeurs de la série temporelle du passé.

12. Procédé selon l'une des revendications précédentes, dans lequel au moins une série temporelle est formée à partir de valeurs mesurées d'une installation d'épuration des eaux résiduaires.

13. Dispositif de régulation pour un processus chimique,

a) dans lequel est prévu au moins un capteur pour l'enregistrement d'une première valeur mesurée,
b) dans lequel est prévue au moins une mémoire pour la mémorisation de valeurs mesurées,
c) dans lequel est prévu un processeur pour les valeurs mesurées enregistrées dans la mémoire,
d) dans lequel est prévu un réseau neuronal avancé,
e) et dans lequel est prévu au moins un effecteur pour influencer le processus chimique,
f) et dans lequel une série temporelle, formée à partir d'une quantité de valeurs mesurées à des intervalles de temps réguliers, est stockée dans la mémoire, ladite série étant amenée au préprocesseur, celui ci regroupant plusieurs valeurs mesurées dans un intervalle de telle façon que la largeur de l'intervalle est choisie d'autant plus grande que les valeurs mesurées comprises dedans remontent à plus loin dans le passé, déduisant de celà une unique valeur par convolution avec une courbe en forme de cloche, et conduisant cette valeur au réseau neuronal avec une autre valeur de la série temporelle stockée dans la mémoire, ladite valeur se trouvant cependant en dehors de l'intervalle, et le réseau neuronal formant à partir de cela une variable réglante pour le processus chimique, et dans lequel cette variable réglante est transmise à l'effecteur.

Figur 1

# Figur 2

# Figur 3

# Figur 4

EFF

V100

STR

NN

V200

PRP

V300

MEM

V400

SENS

Figur 5